# EUROPÄISCHE PATENTSCHRIFT

(11) **EP 2 260 638 B1**
(45) Veröffentlichungstag und Bekanntmachung des Hinweises auf die Patenterteilung: **30.11.2016**
(21) Anmeldenummer: 08863942.2
(22) Anmeldetag: 18.12.2008
(51) Int. Cl.: H04M 1/60, H04M 1/02, H04M 1/725

(54) **VERFAHREN UND TELEFON ZUM SCHNURLOSEN TELEFONIEREN**
METHOD AND TELEPHONE FOR CORDLESS TELEPHONY
PROCÉDÉ ET TÉLÉPHONE POUR TÉLÉPHONIE SANS FIL

(30) Priorität: 20.12.2007 EP 07024828
(43) Veröffentlichungstag der Anmeldung: 15.12.2010
(73) Patentinhaber: Gigaset Communications GmbH, 40549 Düsseldorf (DE)
(72) Erfinder: KAMPERSCHROER, Erich, 46499 Hamminkeln (DE); ORD, Nicholas Keith, 85521 Ottbrunn (DE)
(74) Vertreter: Michalski Hüttermann & Partner Patentanwälte mbB
(86) Internationale Anmeldenummer: PCT/EP2008/067896
(87) Internationale Veröffentlichungsnummer: WO 2009/080704

(56) Entgegenhaltungen:
- US-A1- 2004 266 489
- US-A1- 2005 202 857
- US-A1- 2007 281 648
- "T-Sinus 411 Bedienungsanlaeitung", 9 May 2005 (2005-05-09), Deutsche Telekom AG, Bonn * page 60 * * page 62 *

## Beschreibung

Die Erfindung bezieht sich auf ein Verfahren zum schnurlosen Telefonieren gemäß dem Oberbegriff des Patentanspruches 1 und auf ein Telefon zum schnurlosen Telefonieren gemäß dem Oberbegriff des Patentanspruches 20.

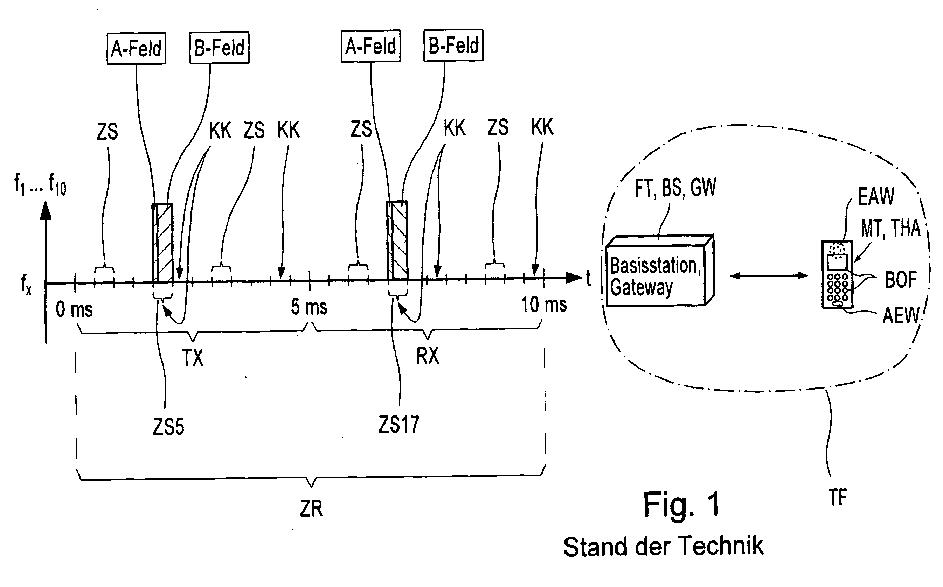

Das Schnurlose Telefonieren verbindet man seit nunmehr fast 20 Jahren mit dem DECT-Standard (**D**igital **E**nhanced **C**ordless **T**elecommunication). Das Grundprinzip des schnurlosen Telefonierens nach dem DECT-Standard ist in FIGUR 1 dargestellt.

Die FIGUR 1 zeigt ein Telefon TF zum schnurlosen Telefonieren sowie einen hierfür auf einer Frequenz fₓ eines Frequenzspektrums von zehn Frequenzen f₁...f₁₀ (Frequency Division **M**ultiple **A**ccess, FDMA) zur Verfügung stehenden periodischen, in Zeitschlitzen ZS unterteilten DECT-Zeitrahmen ZR von 10 ms Dauer (**T**ime **D**ivison **M**ultiple **A**ccess, TDMA).

Das Telefon TF besteht z.B. aus einem vorzugsweise entweder als klassische Basisstation BS oder vor dem Hintergrund aktueller "Voice Over Internet Protokoll (VoIP)"- Entwicklungen im Bereich der Schnurlos-Telefonie als Gateway GW ausgebildeten, an ein leitungs- und/oder paketvermitteltes Netz angeschlossenen (in der FIGUR 1 nicht dargestellt) Festteil FT und mindestens einem als Telefonhandapparat THA mit einem A/E-Wandler AEW, einem E/A-Wandler EAW und einer Bedienoberfläche BOF ausgebildeten Mobilteil MT, das über eine im DECT-Standard spezifizierte Luftschnittstelle mit dem Festteil FT und gegebenenfalls mit weiteren Mobilteilen schnurlos kommuniziert.

Der DECT-Zeitrahmen ZR enthält 24 Zeitschlitze ZS, von denen - aus der Sicht des Mobilteils - jeweils 12 in Sendephase TX (Uplink) und Empfangsphase RX (Downlink) benutzt werden (**T**ime **D**ivision **D**uplex, TDD). Die drahtlose (schnurlose) Kommunikation zwischen dem Festteil FT und dem Mobilteil MT findet vorzugsweise auf zwei Kommunikationskanälen KK mit jeweils einer Frequenz- und Zeitkomponente statt. Während die Frequenzkomponente der beiden Kanäle durch die Frequenz fₓ festgelegt ist, wird die Zeitkomponente der Kanäle durch einen fünften Zeitschlitz ZS5 in der Sendephase TX und durch einen siebzehnten Zeitschlitz ZS17 in der Empfangsphase RX bestimmt.

Auf den beiden Kommunikationskanälen KK werden Daten in Form eines "DECT-Burst" übertragen. Der "Burst" umfasst insbesondere ein A-Feld zur Übertragung von Steuerdaten und ein B-Feld, in dem Nutzdaten übertragen werden.

Im Rahmen der Weiterentwicklung des DECT-Standards zum weltweiten ITU-Standard "CAT-iq™'in'" (**C**ordless **A**dvanced **T**echnology - **i**nternet and **q**uality '**i**ntelligent **n**etworking') sollen insbesondere die nachfolgenden Anforderungen an die Funknetzwerke umgesetzt werden:
- Vereinfachte Bedienbarkeit der Geräte durch den Nutzer gegenüber heutigen Geräten
- Neuartige Applikationen
- Neuartige Gerätekategorien
- Die Komplexität der umfangreichen (Funk-)Netzwerke wird durch neue Technologien vor dem Nutzer verborgen.

In diesem Zusammenhang soll insbesondere auch das technische Problem des Freisprechens bei Telefonen zum schnurlosen Telefonieren gelöst werden.

Hierbei ist "Freisprechen" definiert im Sinne der englischen Übersetzung "hands free", nämlich, dass der Benutzer einen Modus am Telefon aktiviert, bei dem er das Telefon nicht mehr ans Ohr halten muss, sondern beide Hände frei hat, um etwas anderes zu tun und gleichzeitig weiter telefonieren zu können.

Zwar ist Freisprechen heute ein Feature in höherwertigen Schnurlostelefonen, jedoch werden heute in keinem Falle die Anforderungen an ein ideales Freisprechen voll erfüllt, diese nur unzureichende Erfüllung kann sich in Zukunft noch weiter verschärfen durch die Einführung einer breitbandigen Sprachtelefonie, die durch den neuen Standard "CAT-iq™" ermöglicht werden soll.

Das ideale Freisprechen kann wie folgt definiert werden:
- Der Nutzer kann sich frei im Raum bewegen und telefoniert mit gleichbleibender Qualität.
- "Hands free" bedeutet, dass der Nutzer etwas mit den Händen machen kann, während er telefoniert (Papierrascheln, Tippen etc.), dadurch darf jedoch die Qualität des Freisprechens nicht beeinträchtigt werden.
- Verschiedene Personen befinden sich an unterschiedlichen Stellen im Raum, alle für den Gesprächspartner auf der anderen Seite der Telefonleitung gut zu verstehen sein.
- Echo-, Hall- und andere störende Akustikeffekte sollten unterdrückt bzw. nicht vorhanden sein.
- Die Lösung muss kostengünstig und massenmarkttauglich sein.

Bekannt sind derzeit hauptsächlich zwei Methoden, wie das Freisprechen realisiert wird:
**1.** Höherwertige Schnurlostelefone haben einen "HandapparateModus" und einen "Freisprech-Modus". Im Freisprechmodus wird meistens ein zusätzlicher, größerer Lautsprecher eingesetzt, der anstelle der eingebauten Hörkapsel die Stimme des Gesprächspartners wiedergibt. Das Mikrofon im Freisprechmodus ist das Gleiche wie im Handapparatemodus allerdings wird die Mikrofon-Verstärkung erhöht und es werden zusätzliche Methoden zur Echo-Unterdrückung eingesetzt. Darüber hinaus gibt es im Freisprechmodus zusätzliche konstruktive Maßnahmen, um Echo und andere störende Effekte zu unterdrücken.
   Das Freisprechen bei dieser Methode ist ein Kompromiss, der überwiegend durch den Formfaktor des Gerätes sowie durch die vertretbaren Kosten eingeschränkt ist. So darf der Nutzer sich nicht weit vom Telefon wegbewegen, ohne dass erhebliche Qualitätseinbußen in Kauf genommen werden müssen. Der Nutzer sitzt oder steht also in unmittelbarer Nähe des Mikrofons und mit den Händen, die nun frei sind, führt er meist irgendwelche Tätigkeiten in unmittelbarer Nähe zum Mikrofon aus, z.B. Papierrascheln, Tippen auf Tastatur etc. Es entstehen Geräusche durch die die Qualität des Gespräches stark negativ beeinflusst wird. Ähnlich verhält es sich bei Personen, die sich in unterschiedlichen Entfernungen zum Telefon aufhalten.
**2.** Hochwertige Konferenzsysteme sind nur für einen Freisprechmodus ausgelegt und haben andere Formfaktoren (runde Scheiben oder sogenannte "Krakenform"), des weiteren haben die Systeme meist mehrere Mikrofone und setzen umfangreiche Echokompensationsmethoden ein, die hochwertige Signalprozessoren erfordern und damit hohe Gerätekosten verursachen.

Selbst bei solchen teuren, hochwertigen Systemen gibt es weiterhin Einschränkungen. Zwar sind, abhängig von der eingesetzten Technik, auch größere Räume abdeckbar und unterschiedlich weit entfernte Personen werden mit einer besseren Qualität wahrgenommen, aber es bleiben die Probleme mit störenden Geräuschen in der Nähe der Mikrofone. So befinden sich die vorstehend genannten Systeme meist in Konferenzräumen auf den Konferenztischen und hier macht sich Papierrascheln und Tippen auf Tastaturen oder Klopfen auf dem Tisch sehr unangenehm bemerkbar.

Der Hauptnachteil bei den Konferenzsystemen ist allerdings, dass sie verhältnismäßig teuer sind und daher nur vereinzelt in Konferenzräumen eingesetzt werden, außerdem sind diese stationär, also nicht schnurlos.

US 2007/0281648 A1 offenbart ein Verfahren zum Steuern von Tonsignalen an einen FM-Sender und einen Lautsprecher eines Freisprechadapters, das zuerst ein erstes Tonsignal an den Lautsprecher sendet und ein hörbares Lautsprecherartefakt, beispielsweise ein Echorückstrahlverlust und/oder eine Echoendlänge, misst und aufnimmt. Dann sendet der Freisprechadapter ein zweites Tonsignal an den FM-Sender und den Lautsprecher und misst und nimmt ein hörbares FM-Sender- und Lautsprecherartefakt, beispielsweise ein Echorückstrahlverlust und/oder eine Echoendlänge, auf. Falls das hörbare FM-Sender und Lautsprecherartefakt abzüglich des hörbaren Lautsprecherartefakts größer als ein Schwellenwert ist, sendet der Freisprechadapter ein drittes Tonsignal nur an den FM-Sender, und falls das hörbare FM-Sender- und Lautsprecherartefakt abzüglich des hörbaren Lautsprecherartefakts nicht größer als der Schwellenwert ist, sendet der Freisprechadapter das dritte Tonsignal an sowohl den FM-Sender und den Lautsprecher.

US 2005/0202857 A1 offenbart einen modularen, drahtlosen Kopfhörer, der ein Ohrstück (Ohrstücke) und ein Mikrofon (Mikrofone) umfasst, wobei das Ohrstück und das Mikrofon physikalisch getrennte Geräte sein können. Das Ohrstück macht einkommende Radiofrequenzen, die von einem Hostgerät empfangen werden, hörbar. Das Ohrstück kann ein Empfängermodul, ein Datenwiedergewinnungsmodul, und ein Sprechermodul umfassen. Das Empfängermodul kann eingehende RF-Signale in niedrige Zwischenfrequenz (IF)-Signale umwandeln. Das Datenwiedergewinnungsmodul gewinnt Tonsignale aus den niedrigen IF-Signalen wieder. Das Sprechermodul macht die Tonsignale hörbar. Das Mikrofon wandelt empfangene Tonsignale in ausgehende RF-Signale um, wobei die ausgehenden RF-Signale an das Hostgerät geleitet werden. Das Mikrofon umfasst ein Toneingabemodul und ein Sendermodul. Das Toneingabemodul ist betrieblich gekoppelt, um empfangene analoge Tonsignale in digitale Tonsignale umzuwandeln. Das Sendermodul ist betrieblich gekoppelt, um die digitalen Tonsignale in die ausgehenden RF-Signale umzuwandeln.

Die Bedienungsanleitung des Geräts "T-Sinus 411" offenbart die Möglichkeit, ein Gespräch von einem Mobilteil an ein anderes Mobilteil weiterzugeben oder ein Gespräch zwischen einem Mobilteil und einem externen Teilnehmer auf eine Dreierkonferenz mit einem weiteren Mobilteil zu erweitern.

Die der Erfindung zugrunde liegende Aufgabe besteht darin, ein Festteil, ein Mobilteil, ein Verfahren und ein System zum schnurlosen Telefonieren anzugeben, bei dem das Führen eines Telefongespräches im Sinne von Freisprechen freihändig also ohne Zuhilfenahme der Hände erfolgt.

Es werden
ein Festteil, ein Mobilteil, ein Festteil, ein Mobilteil, ein Verfahren und ein System zum schnurlosen Telefonieren gemäß den unabhängigen Ansprüchen angegeben.

Die einem exemplarischen Aspekt der Erfindung zugrunde liegende Idee besteht darin, dass man sich aus elektroakustischen Überlegungen von der Einheit von Lautsprecher bzw. Hörkapsel (A/E-Wandler) und Mikrofon (E/A-Wandler) in einem Gerät löst und Mikrofon und Lautsprecher/Hörkapsel voneinander trennt, also separate Mobilteile vorsieht, die zum schnurlosen Telefonieren jeweils mit einem Festteil durch drahtlose Kommunikation verbunden sind, wobei beide Mobilteile also sowohl das Mikrofon als auch der Lautsprecher nach dem Prinzip der "assoziierten Ressourcen" funktionieren und gegenüber dem Festteil eine solche auch bilden.

Mit anderen Worten: Das Mikrofon verbleibt während des Telefonierens beim Nutzer, z.B. als tragbares erstes Mobilteil, und der Lautsprecher verbleibt bei einem zweiten Mobilteil, das hierzu örtlich getrennt vom ersten Mobilteil entweder als separates Wand- oder Handgerät oder aber als bauliche Einheit mit dem Festteil ausgebildet ist.

Ein effizienter Umgang mit den insgesamt zur Verfügung stehenden physikalischen Ressourcen beim derartig freisprechbasierten Telefonieren ist insbesondere dann sichergestellt, wenn
a) in einer Sendephase dem ersten und zweiten Mobilteil jeweils ein Steuerdaten und Nutzdaten oder nur Steuerdaten transportierender Sendekommunikationskanal der insgesamt zur Verfügung stehenden Kommunikationskanäle zugewiesen wird, wobei
   entweder nur der dem ersten Mobilteil zugewiesene Sendekommunikationskanal einen die Nutzdaten transportierenden Sendesprachkanal enthält oder,
   wenn auch das zweite Mobilteil ein Mikrofon (A/E-Wandler) aufweist, sämtliche den ersten und zweiten Mobilteilen zugewiesenen Sendekommunikationskanäle den Sendesprachkanal enthalten und
b) in einer Empfangsphase dem ersten Mobilteil und dem zweiten Mobilteil ein gemeinsamer, sowohl Steuerdaten als auch Nutzdaten transportierender Empfangskommunikationskanal zugewiesen wird, wobei der im Empfangskommunikationskanal enthaltene Empfangssprachkanal nur durch das zweite Mobilteil benutzt wird.

Letzteres wird beispielsweise dadurch erreicht, dass die Steuerdaten in dem Empfangskommunikationskanal, die für das zweite Mobilteil bestimmt sind, entsprechend, z.B. durch ein Informationselement, gekennzeichnet sind und dem zweiten Mobilteil anzeigen, dass die nachfolgenden Nutzdaten nur für das zweite Mobilteil bestimmt sind.

Die Bildung der "assoziierten Ressourcen" ermöglicht z.B. folgende Telefonie-Szenarien:
1. Wird die assoziierte Ressource aus einem ersten Mobilteil und dem zweiten Mobilteil MT2 gebildet, so kann ein freisprechbasiertes Telefongespräch geführt werden.
2. Wird die assoziierte Ressource aus mindestens zwei ersten Mobilteil und dem zweiten Mobilteil gebildet, so kann eine freisprechbasierte Telefonkonferenz geführt werden.
3. Weist das zweite Mobilteil auf seiner Bedienoberfläche neben dem Lautsprecher/der Hörkapsel und einer Tastatur auch ein Mikrofon auf und wird ein Telefongespräch (eingehend oder abgehend) z.B. durch das Betätigen einer Gesprächsannahmetaste angenommen oder durch Tastenbetätigungen aufgebaut, so kann ein derart begonnenes Telefongespräch, bei der Sendesprachdaten über das Mikrofon des zweiten Mobilteils transportiert werden, bezüglich dieser Sendesprachdaten von dem zweiten Mobilteil auf das erste Mobilteil umgeleitet bzw. übergeben werden.

Mit dieser letzten Weiterbildung ist man bei einem Gesprächsbeginn am zweiten Mobilteil, insbesondere dann, wenn dieses als Wandgerät ausgebildet oder sogar in dem Festteil integriert ist, in Bezug auf das erfindungsgemäße freisprechbasierte Telefonieren nicht an das zweite Mobilteil gebunden, sondern kann die Sendesprachdaten auf das am menschlichen Körper, z.B. an der Kleidung durch eine Clip- oder Klettverbindung befestigbare, tragbare erste Mobilteil umleiten bzw. übergeben.

Gleichermaßen vorteilhaft beim erfindungsgemäßen freisprechbasierten Telefonieren ist es, dass das erste Mobilteil im Ruhezustand, wenn kein Telefongespräch geführt wird, mit dem zweiten Mobilteil zu einer baulichen Einheit lösbar verbunden ist und für das Führen eines freisprechbasierten Telefongespräches dann von dem zweiten Mobilteil entfernt wird und anschließend nach Beenden des Gespräches entweder wieder mit dem zweiten Mobilteil lösbar verbunden wird oder aber in dem entfernten Zustand verbleibt.

Darüber hinaus ist es nach diesem Prinzip auch möglich, eine freisprechbasierte Telefonkonferenz abzuhalten, wenn z.B. mindestens zwei erste Mobilteile im Ruhezustand mit dem zweiten Mobilteil zu einer baulichen Einheit lösbar verbunden sind und für das Führen der freisprechbasierten Telefonkonferenz mindestens zwei der ersten Mobilteile entweder gleichzeitig oder nacheinander von dem zweiten Mobilteil entfernt werden.

Zusätzliche vorteilhafte Weiterbildungen der Erfindung sind in den übrigen Unteransprüchen sowie der nachfolgenden Beschreibung eines Ausführungsbeispiels angegeben.

Das Ausführungsbeispiel der Erfindung wird anhand der FIGUREN 2 bis 6 erläutert. Es zeigen:
FIGUR 2 Schnurloses Telefonieren im Sinne von Freisprechen nach dem Prinzip der "Assoziierten Ressourcen"
FIGUR 3 ein erstes Meldungsflussdiagramm, um ausgehend von dem Telefon gemäß der FIGUR 2 und deren Beschreibung mit einem Telefon nach dem Prinzip der "Assoziierten Ressourcen" derart freisprechbasiert telefonieren zu können, dass bei einem eingehenden Telefongespräch dieses durch Betätigen einer "Gesprächsannahmetaste" am ersten Mobilteil angenommen wird,
FIGUR 4 ein zweites Meldungsflussdiagramm, um ausgehend von dem Telefon gemäß der FIGUR 2 und deren Beschreibung mit einem Telefon nach dem Prinzip der "Assoziierten Ressourcen" derart freisprechbasiert telefonieren zu können, dass bei einem eingehenden Telefongespräch dieses zunächst über einen dem zweiten Mobilteil MT2 zugewiesenen A/E-Wandler geführt und dann auf das erste Mobilteil umgeschaltet wird,
FIGUR 5 ein erstes Szenario zum freihändigen Führen eines Telefongespräches im Sinne von Freisprechen, also ohne Zuhilfenahme der Hände,
FIGUR 6 ein zweites Szenario zum freihändigen Führen einer Telefonkonferenz im Sinne von Freisprechen, also ohne Zuhilfenahme der Hände.

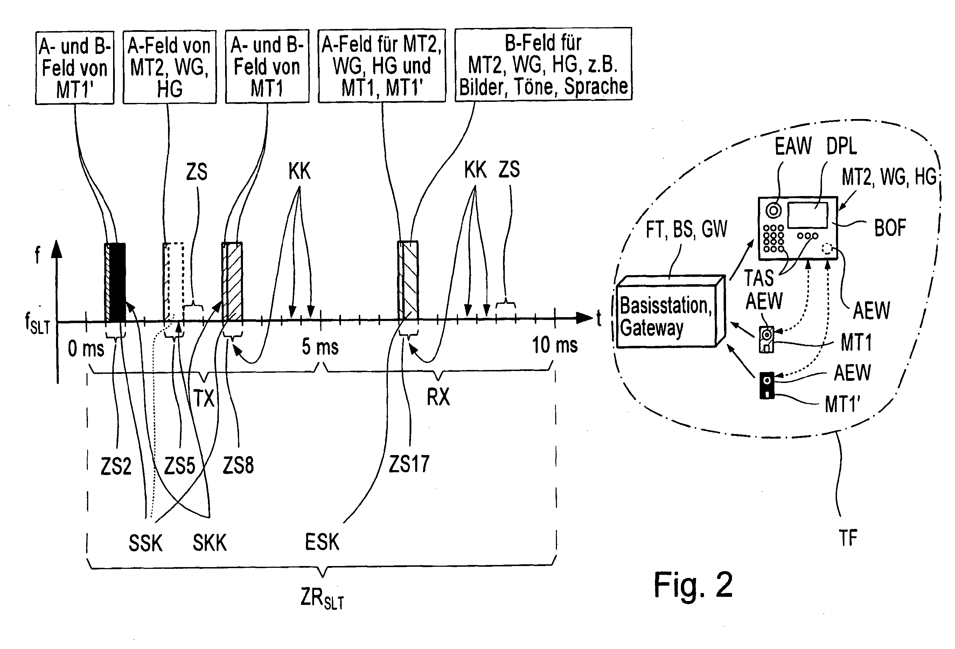

FIGUR 2 zeigt auf der Basis der FIGUR 1 ein Telefon TF zum schnurlosen Telefonieren im Sinne von Freisprechen nach dem Prinzip der "Assoziierten Ressourcen" sowie einen hierfür auf einer Frequenz f_{SLT} eines Frequenzspektrums zur Verfügung stehenden periodischen, wieder in Zeitschlitzen ZS unterteilten Zeitrahmen ZR_{SLT} von 10 ms Dauer.

Das Telefon TF umfasst z.B.
(i) ein wieder entweder als klassische Basisstation BS oder als Gateway GW ausgebildetes, an ein leitungs- und/oder paketvermitteltes Netz angeschlossenes (in der FIGUR 2 nicht dargestellt) Festteil FT,
(ii) mindestens ein vorzugsweise am menschlichen Körper tragbares - z.B. an der Kleidung durch eine Clip- oder Klettverbindung befestigbares- erstes Mobilteil MT1, MT1' (ein erstes Mobilteil MT1 und ein weiteres erstes Mobilteil MT1'), das ein als Mikrofon ausgebildeten A/E-Wandler AEW und eine als Gesprächsannahme-, Gesprächsbeginn- und Gesprächsendetaste ausgebildete Taste TA aufweist, und
(iii) mindestens ein vorzugsweise als Wandgerät WG oder Handgerät HG ausgebildetes zweites Mobilteil MT2, das vorzugsweise mit einem als Lautsprecher oder Hörkapsel ausgebildeten E/A-Wandler EAW und einer aus einer Tastatur TAS und einem Display DPL bestehenden Bedienoberfläche BOF sowie optional mit einem als Mikrofon ausgebildeten A/E-Wandler AEW ausgestattet ist.

Alternativ zur Ausprägung des Telefons TF gemäß (iii) ist auch eine Ausprägung denkbar, bei der das zweite Mobilteil MT2 eine bauliche Einheit mit dem Festteil FT bildet.

Neben diesen genannten Eigenschaften und der jeweils speziell zugewiesenen Einzelausstattung weisen das Festteil FT und die Mobilteile MT1, MT1', MT2 noch die für das schnurlose Telefonieren benötigte, herkömmliche Grundausstattung (in der FIGUR 2 nicht explizit dargestellt) auf, als da sind ein Funkteil und eine Steuereinrichtung sowie im Fall des Festteils FT zusätzlich noch jeweils eine Schnittstelle zum leitungs- und/oder paketvermittelten Netz und Stromversorgungsnetz und im Fall der Mobilteile MT1, MT1', MT2 eine zellenbasierte (Primär- und Sekundärzelle) Stromversorgung, z.B. Batterie oder Akku.

Während die Steuereinrichtung unter anderem die Funktions- und Steuerungsabläufe in dem jeweiligen Fest- oder Mobilteil steuert, bilden das Funkteil und die Steuereinrichtung darüber hinaus im Wesentlichen eine vorzugsweise gemäß dem CAT-iq™'in'-Standard spezifizierte Luftschnittstelle über die das Festteil FT und die Mobilteile MT1, MT1', MT2 schnurlos bzw. drahtlos miteinander kommunizieren. Die Luftschnittstelle wird in der FIGUR 2 durch die drei Einfachpfeile zwischen dem Festteil FT, BS, GW und den drei Mobilteilen MT1, MT1', MT2 symbolisiert.

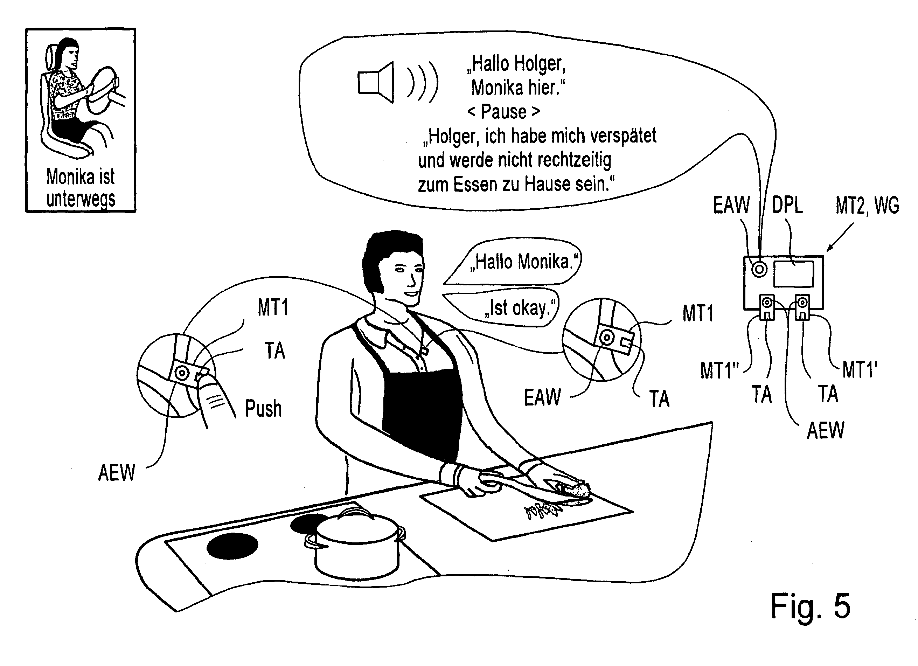

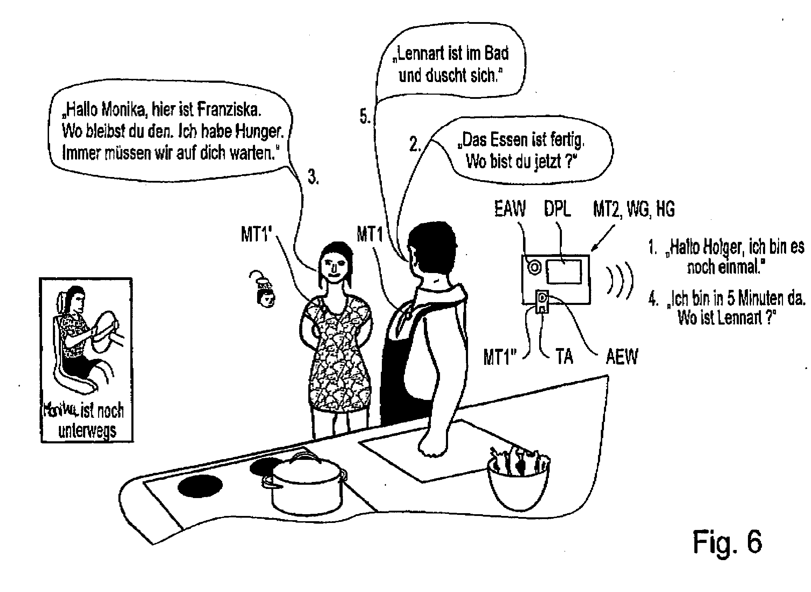

Die schnurlose bzw. drahtlose Kommunikation ist insbesondere dadurch geprägt, dass mit der aus einem ersten Mobilteil MT1 und dem zweiten Mobilteil MT2 gebildeten "assoziierten Ressourcen" ein freisprechbasiertes Telefongespräch [vgl.: FIGUR 5 mit der dazugehörigen Beschreibung] und mit der aus mindestens zwei ersten Mobilteil MT1, MT1' und dem zweiten Mobilteil MT2 gebildeten "assoziierten Ressourcen" eine freisprechbasierte Telefonkonferenz [vgl.: FIGUR 6 mit der dazugehörigen Beschreibung] geführt werden kann.

Eine Besonderheit des dargestellten Telefons TF ist es weiterhin, dass die ersten Mobilteile MT1, MT1' im Ruhezustand, also wenn kein Telefongespräch geführt wird, mit dem zweiten Mobilteil MT2 zu einer baulichen Einheit lösbar verbunden sind und zum Führen eines Telefongespräches zumindest eines der beiden ersten Mobilteile MT1, MT1' von dem zweiten Mobilteil MT2 entfernt wird. Dies wird in der FIGUR 2 durch den gepunkteten Doppelpfeil dargestellt. Werden beide ersten Mobilteile MT1, MT1' entweder gleichzeitig oder nacheinander von dem zweiten Mobilteil MT2 entfernt, so können z.B. zwei Personen in einer Telefonkonferenz mit dem anrufenden Teilnehmer (angenommenes Telefongespräch; "incoming call") oder dem angerufenen Teilnehmer (abgehendes Telefongespräch; "outgoing call") kommunizieren. Stehen mehr als zwei erste Mobilteile zur Verfügung, so können in einem solchen Fall auch mehr als zwei Personen an einer Telefonkonferenz teilnehmen [vgl.: FIGUR 6 mit der dazugehörigen Beschreibung].

Der gemäß der FIGUR 2 dargestellte Zeitrahmen ZR_{SLT} enthält beispielweise 24 Zeitschlitze ZS, von denen - aus der Sicht des Mobilteils - jeweils 12 in Sendephase TX (Uplink) und Empfangsphase RX (Downlink) benutzt werden. Die drahtlose (schnurlose) Kommunikation zwischen dem Festteil FT und den Mobilteilen MT1, MT1, MT2 findet jeweils vorzugsweise auf zwei Kommunikationskanälen KK mit jeweils einer Frequenz- und Zeitkomponente statt. Während die Frequenzkomponente der beiden Kanäle durch die Frequenz f_{SLT} festegelegt ist, wird die Zeitkomponente der Kanäle wie folgt bestimmt:
a) Für das erste Mobilteil MT1 wird die Zeitkomponente durch einen achten Zeitschlitz ZS8 in der Sendephase TX und durch einen siebzehnten Zeitschlitz ZS17 in der Empfangsphase RX bestimmt.
b) Für das weitere erste Mobilteil MT1' wird die Zeitkomponente durch einen zweiten Zeitschlitz ZS2 in der Sendephase TX und durch den siebzehnten Zeitschlitz ZS17 in der Empfangsphase RX bestimmt.
c) Für das zweite Mobilteil MT2 wird die Zeitkomponente durch einen fünften Zeitschlitz ZS5 in der Sendephase TX und durch den siebzehnten Zeitschlitz ZS17 in der Empfangsphase RX bestimmt.

Auf den jeweils beiden Kommunikationskanälen KK werden Daten in Form eines "Burst" übertragen. In der Sendephase TX werden die "Bursts" für die Mobilteile MT1, MT1', MT2 in Sendekommunikationskanäle SKK übertragen, während in der Empfangsphase RX der "Burst" für die Mobilteile MT1, MT1', MT2 vorzugsweise in einem gemeinsamen Empfangskommunikationskanal EKK übertragen wird.

Bezüglich des einen Empfangskommunikationskanals EKK in der Empfangsphase RX ist es alternativ auch möglich, wenngleich dies jedoch nicht so effizient in Bezug auf die insgesamt zur Verfügung stehenden physikalischen Ressourcen ist, dass entweder das zweite Mobilteile MT2 und alle ersten Mobilteile MT1, MT1' zusammen jeweils einen Empfangskommunikationskanal EKK in der Empfangsphase RX zugewiesen bekommen oder das zweite Mobilteile MT2 und jedes erstes Mobilteil MT1, MT1' jeweils einen Empfangskommunikationskanal EKK in der Empfangsphase RX zugewiesen bekommen.

Der Sendekommunikationskanal SKK für das erste Mobilteil MT1 im Zeitschlitz ZS8 beinhaltet ein A-Feld zur Übertragung von Steuerdaten und ein B-Feld, in dem Nutzdaten übertragen werden. Die Nutzdaten sind beim schnurlosen Telefonieren Sprachdaten, die demzufolge in einem Sendesprachkanal SSK des Sendekommunikationskanals SKK übertragen werden.

Der Sendekommunikationskanal SKK für das weitere erste Mobilteil MT1' im Zeitschlitz ZS2 beinhaltet ebenfalls ein A-Feld zur Übertragung von Steuerdaten und ein B-Feld, in dem Nutzdaten übertragen werden. Die Nutzdaten sind auch hier Sprachdaten, die demzufolge in einem Sendesprachkanal SSK des Sendekommunikationskanals SKK übertragen werden.

Der Sendekommunikationskanal SKK für das zweite Mobilteil MT2 im Zeitschlitz ZS5 beinhaltet, wenn (i) das zweite Mobilteil MT2 keinen A/E-Wandler AEW aufweist, nur ein A-Feld zur Übertragung von Steuerdaten und, wenn (ii) das zweite Mobilteil MT2 einen A/E-Wandler AEW aufweist, sowohl ein A-Feld für die Steuerdaten als auch ein B-Feld, in dem Nutzdaten übertragen werden. Der Fall (ii) ist in der FIGUR 2 in Bezug auf den Zeitschlitz ZS 5 gestrichelt dargestellt. Die Nutzdaten wären danach auch hier Sprachdaten, die demzufolge in einem Sendesprachkanal SSK des Sendekommunikationskanals SKK übertragen werden würden.

Das Aussenden eines A-Feldes für die Mobilteile MT1, MT1', MT2 ist insbesondere dann notwendig, wenn der Nutzer ein Telefongespräch zum Beginnen oder Beenden des Gespräches durch Tastenbetätigungen auf der Tastatur TAS oder durch Betätigung der Taste TA auslöst.

Der gemeinsame Empfangskommunikationskanal EKK für die ersten und zweiten Mobilteile MT1, MT1', MT2 im Zeitschlitz ZS17 beinhaltet ein A-Feld zur Übertragung von Steuerdaten und ein B-Feld, in dem Nutzdaten übertragen werden. Die Nutzdaten sind beim schnurlosen Telefonieren im Wesentlichen wieder Sprachdaten, die demzufolge in einem Empfangssprachkanal ESK des Empfangskommunikationskanals EKK übertragen werden. Es können aber in diesem Fall (des zweiten Mobilteils MT2) auch Bilddaten und akustische Daten (Töne) sein, die in dem Empfangssprachkanal ESK des Empfangskommunikationskanals EKK übertragen werden.

Der im Empfangskommunikationskanal EKK enthaltene Empfangssprachkanal ESK wird nur durch das zweite Mobilteil benutzt. Dies wird beispielsweise dadurch erreicht, dass die Steuerdaten in dem Empfangskommunikationskanal EKK, die für das zweite Mobilteil bestimmt sind, entsprechend, z.B. durch ein Informationselement, gekennzeichnet sind und dem zweiten Mobilteil anzeigen, dass die nachfolgenden Nutzdaten nur für das zweite Mobilteil bestimmt sind.

Das hier dargestellte Systemkonzept kann beliebig weiter verfeinert werden,
- so mag es z.B. schwierig sein, dass B-Feld für das zweite Mobilteil MT2 in der Sendephase TX zu unterdrücken,
- außerdem könnte ein erstes Mobilteil MT1 das B-Feld des zweiten Mobilteil MT2 nutzen, was aber Probleme bezüglich der Synchronisation etc. mit sich bringt,
- so wird bei dem Systemkonzept die Symmetrie zwischen Sende- und Empfangskommunikationskanal aufgegeben.

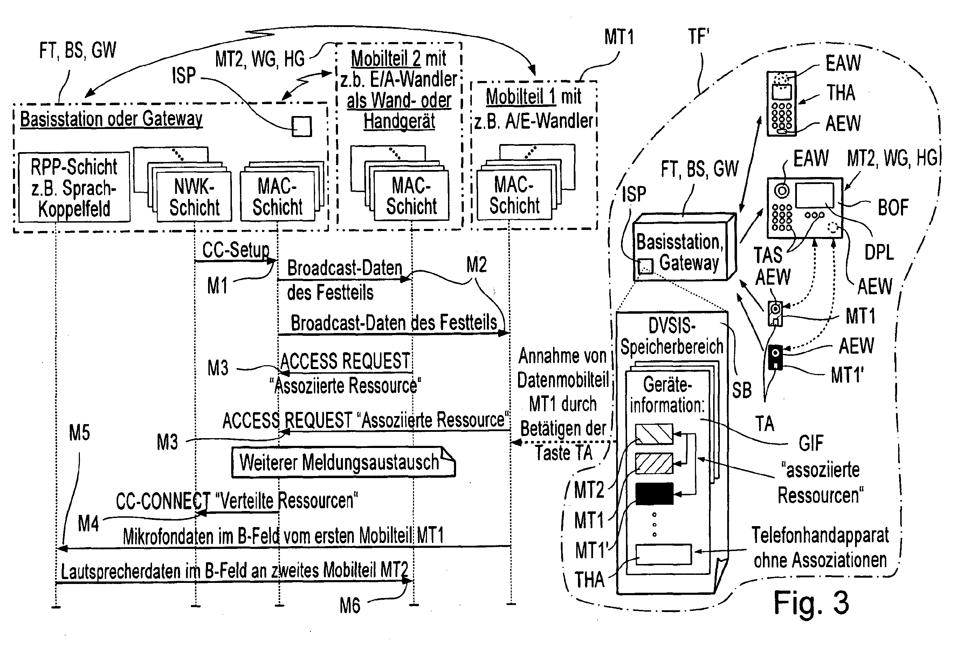

FIGUR 3 zeigt ein erstes Meldungsflussdiagramm, um ausgehend von dem Telefon TF gemäß der FIGUR 2 und deren Beschreibung mit einem Telefon TF' nach dem Prinzip der "Assoziierten Ressourcen" derart freisprechbasiert telefonieren zu können, dass bei einem eingehenden Telefongespräch dieses durch Betätigen der Taste TA am ersten Mobilteil MT1 angenommen wird.

Das Telefon TF' weist im Unterschied zu dem Telefon TF gemäß der FIGUR 2 noch zusätzlich einen herkömmlich ausgebildeten und für das schnurlose Telefonieren verwendeten Telefonhandapparat THA auf, der ebenfalls über eine Luftschnittstelle mit dem Festteil FT, BS, GW verbunden ist. Diese zusätzliche Luftschnittstelle wird in der FIGUR 3 durch den Doppelpfeil zwischen dem Festteil FT, BS, GW und dem Telefonhandapparat THA symbolisiert.

In Übereinstimmung mit dem in der FIGUR 1 gezeigten Telefonhandapparat besteht der Telefonhandapparat THA in der FIGUR 3 aus einem vorzugsweise als Mikrofon ausgebildeter A/E-Wandler AEW, einem vorzugsweise als Lautsprecher oder Hörkapsel ausgebildeter E/A-Wandler EAW und einer Bedienoberfläche BOF. Er gehört aber nicht zu den "assoziierten Ressourcen" des in der FIGUR 2 dargestellten Telefons.

Damit nun das Festteil FT, BS, GW des Telefons TF' alle die ihr zugeordneten Geräte (Telefonhandapparat THA und Mobilteile MT1, MT1', MT2) einerseits verwalten und andererseits als zu den "assoziierten Ressourcen" gehörend zuordnen kann, weist es einen Informationsspeicher ISP auf. In diesem Informationsspeicher ISP sind in einem "**D**istributed **V**irtual **S**hared **I**nformation **S**paces (DVSIS)"-Speicherbereich SB - die "Distributed Virtual Shared Information Spaces" sind geplanter Bestandteil des ITU-Standard "CAT-iq™'in'" - Geräteinformationen GIF hinterlegt, anhand derer die Steuereinrichtung des Festteils FT, BS, GW entnehmen kann, welche der genannten Geräte die "assoziierten Ressourcen" bilden und welches Gerät noch zusätzlich dem Festteil FT, BS, GW zugeordnet ist. Im vorliegenden Fall bilden die Mobilteile MT1, MT1', MT2 die "assoziierten Ressourcen" und der Telefonhandapparat THA ist dem Festteil noch zusätzlich zugeordnet.

Der Meldungsfluss in der FIGUR 3 findet einerseits zwischen dem Festteil FT, BS, GW und dem ersten Mobilteil MT1 und andererseits zwischen dem Festteil FT, BS, GW und dem zweiten Mobilteil MT2 statt.

Dieser basiert gemäß dem ISO/OSI-Schichtenmodell - bestehend aus einer Bitübertragungsschicht (Schicht 1), einer Sicherungsschicht (Schicht 2), einer Vermittlungsschicht (Schicht 3), einer Transportschicht (Schicht 4), einer Kommunikationsteuerungsschicht (Schicht 5), einer Darstellungsschicht (Schicht 6) und einer Applikationsschicht (Schicht 7) - in einer vereinfachten Betrachtung, wenngleich eigentlich alle Schichten an dem Meldungsfluss beteiligt sind, auf folgende Schichten:
- Bezüglich des Festteils FT, BS, GW auf die z.B. ein Sprach-Koppelfeld repräsentierende Applikationsschicht (APP-Schicht), die Vermittlungsschicht (NWK-Schicht) und die Sicherungsschicht (MAC-Schicht).
- Bezüglich des ersten Mobilteils MT1 auf die Sicherungsschicht (MAC-Schicht).
- Bezüglich des zweiten Mobilteils MT2 ebenfalls auf die Sicherungsschicht (MAC-Schicht).

Der Meldungsfluss beginnt damit, dass in dem Festteil FT, BS, GW die NWK-Schicht mit einer ersten Meldung M1 ein <CC-SETUP> an die MAC-Schicht geschickt wird. Diese überträgt daraufhin mit jeweils einer zweiten Meldung M2 <Broadcast-Daten> des Festteils an die MAC-Schicht des ersten Mobilteils MT1 und des zweiten Mobilteils MT2. Als Reaktion hierauf wird jeweils von der MAC-Schicht in den beiden Mobilteilen MT1, MT2 mit einer dritten Meldung M3 ein <ACCESS REQUEST "Assoziierte Ressource"> an die MAC-Schicht des Festteils gesendet.

In dem Festteil FT, BS, GW ist zuvor (z.B. bei der Anmeldung der beiden Mobilteile bei dem Festteil; in der FIGUR 3 nicht dargestellt) gesteuert von der Steuereinrichtung in dem DVSIS-Speicherbereich SB des Informationsspeichers ISP als Geräteinformation GIF ein Eintrag vorgenommen worden, der die beiden Mobilteile MT1, MT2 als "Assoziierte Ressourcen" kennzeichnet. Symbolisch ist dieser Eintrag in dem DVSIS-Speicherbereich SB mit der Geräteinformation GIF durch den Doppelpfeil auf die beiden mit MT1 und MT2 bezeichneten "kleinen Rechtecke" dargestellt.

Aufgrund dieses Eintrages in dem Feld "Geräteinformation GIF" im DVSIS-Speicherbereich SB des Informationsspeichers ISP und der dritten Meldung M3 weiß die Steuereinrichtung und damit die MAC-Schicht, die NWK-Schicht und die APP-Schicht in dem Festteil FT, BS, GW, dass die beiden Mobilteile MT1, MT2 zur "assoziierten Ressource" gehören und verzweigt entsprechend die Nutzdaten und Steuerungsdaten [vgl.: FIGUR 2 mit der dazugehörigen Beschreibung].

Wird nun z.B. ein eingehendes Telefongespräch am ersten Mobilteil MT1 beispielsweise durch Betätigen der Taste TA, die z.B. als Gesprächsannahmetaste ausgebildet ist, angenommen, so findet unterdessen zwischen der MAC-Schicht des Festteils FT, BS, GW und der MAC-Schicht des zweiten Mobilteil MT2 ein weiterer für die Erfindung jedoch unerheblicher und deshalb nicht näher spezifizierter Meldungsaustausch statt.

Alternativ zu der Gesprächsannahme mittels der Taste ist es aber auch möglich, das Telefongespräch durch Spracheingabe über den A/E-Wandler AEW im ersten Mobilteil MT1 anzunehmen.

Nach der Gesprächsannahme durch das erste Mobilteil MT1, wird in dem Festteil FT, BS, GW von der MAC-Schicht mit einer vierten Meldung M4 ein <CC-CONNECT "Verteilte Ressourcen"> an die NWK-Schicht geschickt.

Erhält die APP-Schicht des Festteils FT, BS, GW nun von der MAC-Schicht des das Telefongespräch annehmenden ersten Mobilteils MT1 mit einer fünften Meldung M5 die von dem A/E-Wandler AEW im Sendesprachkanal übertragenen Sprachdaten bzw. die Mikrofondaten im B-Feld, so überträgt es im Gegenzug mit einer sechsten Meldung M6 aufgrund der vierten Meldung M4 im Empfangssprachkanal Sprachdaten bzw. Lautsprecherdaten im B-Feld an die MAC-Schicht des zweiten Mobilteils MT2, wo diese von dem E/A-Wandler EAW ausgegeben werden.

Das im Zusammenhang mit der FIGUR 3 für ein eingehendes Telefongespräch ("incoming call") erläuterte Meldungsflussdiagramm behält im Wesentlichen auch für ein abgehendes Telefongespräch ("outgoing call") seine Gültigkeit. Das bedeutet, dass die Meldungen im Wesentlichen in gleicher Weise gesendet werden. Aus diesem Grund ist auf eine separate Darstellung und Beschreibung verzichtet worden.

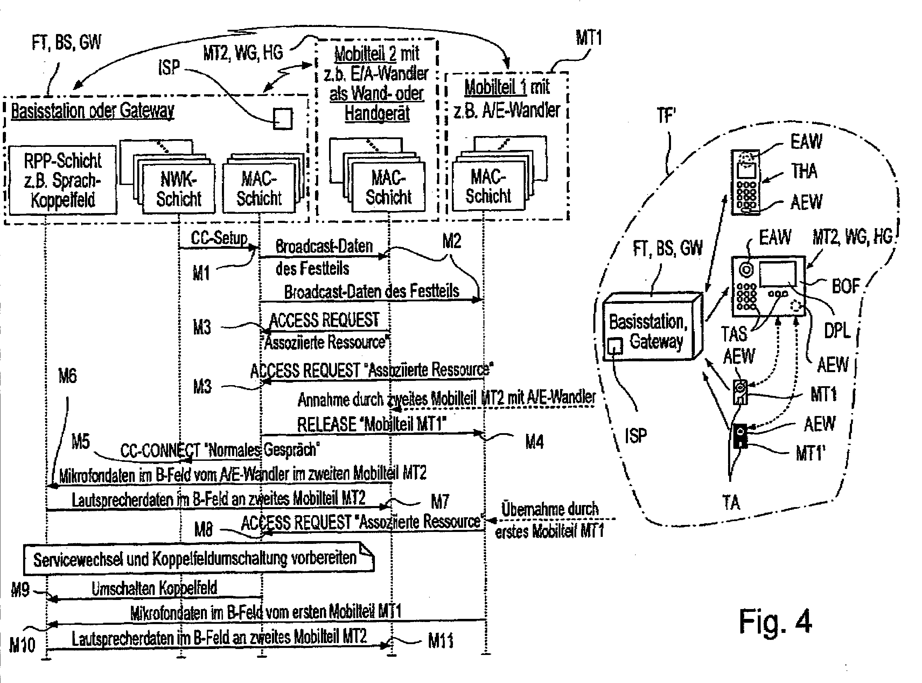

FIGUR 4 zeigt ein zweites Meldungsflussdiagramm, um ausgehend von dem Telefon gemäß der FIGUR 2 und deren Beschreibung mit einem Telefon nach dem Prinzip der "Assoziierten Ressourcen" derart freisprechbasiert telefonieren zu können, dass bei einem eingehenden Telefongespräch dieses zunächst über einen dem zweiten Mobilteil MT2 intern zugewiesenen A/E-Wandler AEW geführt und dann auf das erste Mobilteil MT1 umgeschaltet wird.

Das Telefon TF' weist im Unterschied zu dem Telefon TF gemäß der FIGUR 2 noch zusätzlich wieder den herkömmlich ausgebildeten und für das schnurlose Telefonieren verwendeten Telefonhandapparat THA auf, der ebenfalls über die Luftschnittstelle mit dem Festteil FT, BS, GW verbunden ist. Diese zusätzliche Luftschnittstelle wird in der FIGUR 4 erneut durch den Doppelpfeil zwischen dem Festteil FT, BS, GW und dem Telefonhandapparat THA symbolisiert.

In Übereinstimmung mit dem in der FIGUR 1 gezeigten Telefonhandapparat besteht der Telefonhandapparat THA in der FIGUR 4 wieder aus dem vorzugsweise als Mikrofon ausgebildeter A/E-Wandler AEW, dem vorzugsweise als Lautsprecher oder Hörkapsel ausgebildeter E/A-Wandler EAW und der Bedienoberfläche BOF. Er gehört aber wie der Telefonhandapparat in der FIGUR 3 nicht zu den "assoziierten Ressourcen" des in der FIGUR 2 dargestellten Telefons.

Der Meldungsfluss in der FIGUR 4 findet wieder einerseits zwischen dem Festteil FT, BS, GW und dem ersten Mobilteil MT1 und andererseits zwischen dem Festteil FT, BS, GW und dem zweiten Mobilteil MT2 statt.

Dieser basiert dabei erneut gemäß dem ISO/OSI-Schichtenmodell in einer vereinfachten Betrachtung, wenngleich eigentlich alle Schichten an dem Meldungsfluss beteiligt sind, auf folgende Schichten:
- Bezüglich des Festteils FT, BS, GW auf die z.B. das Sprach-Koppelfeld repräsentierende Applikationsschicht (APP-Schicht), die Vermittlungsschicht (NWK-Schicht) und die Sicherungsschicht (MAC-Schicht).
- Bezüglich des ersten Mobilteils MT1 auf die Sicherungsschicht (MAC-Schicht).
- Bezüglich des zweiten Mobilteils MT2 ebenfalls auf die Sicherungsschicht (MAC-Schicht).

Der Meldungsfluss beginnt damit, dass in dem Festteil FT, BS, GW die NWK-Schicht mit einer ersten Meldung M1 ein <CC-SETUP> an die MAC-Schicht geschickt wird. Diese überträgt daraufhin mit jeweils einer zweiten Meldung M2 <Broadcast-Daten> des Festteils an die MAC-Schicht des ersten Mobilteils MT1 und des zweiten Mobilteils MT2. Als Reaktion hierauf wird jeweils von der MAC-Schicht in den beiden Mobilteilen MT1, MT2 mit einer dritten Meldung M3 ein <ACCESS REQUEST "Assoziierte Ressource"> an die MAC-Schicht des Festteils gesendet.

In dem Festteil FT, BS, GW ist zuvor wieder (z.B. bei der Anmeldung der beiden Mobilteile bei dem Festteil; in der FIGUR 4 nicht dargestellt) gesteuert von der Steuereinrichtung in dem DVSIS-Speicherbereich des Informationsspeichers als Geräteinformation ein Eintrag vorgenommen worden, der die beiden Mobilteile MT1, MT2 als "Assoziierte Ressourcen" kennzeichnet [vgl.: FIGUR 3 mit der dazugehörigen Beschreibung].

Aufgrund dieses Eintrages in dem Feld "Geräteinformation" im DVSIS-Speicherbereich des Informationsspeichers und der dritten Meldung M3 weiß die Steuereinrichtung und damit die MAC-Schicht, die NWK-Schicht und die APP-Schicht in dem Festteil FT, BS, GW, dass die beiden Mobilteile MT1, MT2 zur "assoziierten Ressource" gehören und verzweigt entsprechend die Nutzdaten und Steuerungsdaten [vgl.: FIGUR 2 mit der dazugehörigen Beschreibung].

Wird nun z.B. ein eingehendes Telefongespräch am zweiten Mobilteil MT2, das in diesem Fall den internen optionalen A/E-Wandler AEW aufweist, beispielsweise durch Betätigen einer Gesprächsannahmetaste auf der Tastatur TAS angenommen, so wird daraufhin zum Abbauen der Verbindung "Festteil <--> erstes Mobilteil" von der MAC-Schicht des Festteils FT, BS, GW mit einer vierten Meldung M4 ein <RELEASE "Mobilteil MT1"> an die MAC-Schicht des erstes Mobilteils MT1 gesendet.

Alternativ zu der Gesprächsannahme mittels der Taste ist es aber auch möglich, das Telefongespräch durch Spracheingabe über den internen A/E-Wandler AEW im zweiten Mobilteil MT2 anzunehmen.

Nach der Gesprächsannahme durch das zweite Mobilteil MT2, wird in dem Festteil FT, BS, GW von der MAC-Schicht mit einer fünften Meldung M5 ein <CC-CONNECT "Normales Gespräch"> an die NWK-Schicht geschickt.

Erhält die APP-Schicht des Festteils FT, BS, GW nun von der MAC-Schicht des das Telefongespräch annehmenden zweiten Mobilteils MT2 mit einer sechsten Meldung M6 die von dem internen A/E-Wandler AEW im Sendesprachkanal übertragenen Sprachdaten bzw. die Mikrofondaten im B-Feld, so überträgt es im Gegenzug mit einer siebten Meldung M7 aufgrund der fünften Meldung M5 im Empfangssprachkanal Sprachdaten bzw. Lautsprecherdaten im B-Feld an die MAC-Schicht des zweiten Mobilteils MT2, wo diese von dem E/A-Wandler EAW ausgegeben werden.

Wird jetzt entweder durch Entfernen des ersten Mobilteils MT1 von dem zweiten Mobilteil MT2, weil es mit diesem zu einer baulichen Einheit lösbar verbunden ist, oder aber durch Betätigen der Taste TA des ersten Mobilteils MT1 eine Übernahme des Telefongespräches bezüglich der Sendesprachdaten (Mikrofondaten) eingeleitet, so sendet die MAC-Schicht des ersten Mobilteil MT1 im Anschluss daran mit einer achten Meldung M8 ein <ACCESS REQUEST "Assoziierte Ressource"> an die MAC-Schicht des Festteils FT, BS, GW.

Im Festteil FT, BS, GW werden von der Steuereinrichtung daraufhin ein Servicewechsel und eine Koppelfeldumschaltung vorbereitet und abschließend von der MAC-Schicht mit einer neunten Meldung M9 ein Umschalten des Koppelfeldes der APP-Schicht mitgeteilt.

Erhält die APP-Schicht des Festteils FT, BS, GW nun von der MAC-Schicht des das Telefongespräch übernehmenden ersten Mobilteils MT1 mit einer zehnten Meldung M10 die von dem A/E-Wandler AEW im Sendesprachkanal übertragenen Sprachdaten bzw. die Mikrofondaten im B-Feld, so überträgt es im Gegenzug mit einer elften Meldung M11 aufgrund der neunten Meldung M9 im Empfangssprachkanal Sprachdaten bzw. Lautsprecherdaten im B-Feld an die MAC-Schicht des zweiten Mobilteils MT2, wo diese von dem E/A-Wandler EAW ausgegeben werden.

Das im Zusammenhang mit der FIGUR 4 für ein eingehendes Telefongespräch ("incoming call") mit anschließender Weiterleitung/Umleitung der Mikrofondaten (Mikrofon-Umschaltung) erläuterte Meldungsflussdiagramm behält im Wesentlichen auch für ein abgehendes Telefongespräch ("outgoing call") mit anschließender Weiterleitung/Umleitung der Mikrofondaten (Mikrofon-Umschaltung) seine Gültigkeit. Das bedeutet, dass die Meldungen im Wesentlichen in gleicher Weise gesendet werden. Aus diesem Grund ist auf eine separate Darstellung und Beschreibung verzichtet worden.

FIGUR 5 zeigt ein erstes Szenario zum freihändigen Führen eines Telefongespräches im Sinne von Freisprechen, also ohne Zuhilfenahme der Hände, bei dem Monika mit dem Auto unterwegs ist und sich Holger in der Küche beim Kochen aufhält. In der Küche befindet sich auch das als Wandgerät WG ausgebildete zweite Mobilteil MT2 mit dem Display DPL dem als Lautsprecher ausgebildeten E/A-Wandler EAW und der Tastatur TAS. An diesem Wandgerät WG lösbar befestigt, z.B. mittels Clip- oder Klettverbindung, sind zwei erste Mobilteile MT1', MT1". Ein weiteres erstes Mobilteil MT1 ist im Bereich der Knopfleiste des Hemdes von Holger lösbar befestigt. Monika ruft jetzt mit ihrem Möbiltelefon-Headset aus dem Auto bei Holger an. Holger, der auf der Küchenarbeitsplatte gerade Paprika in Streifen schneidet, nimmt den Anruf von Monika durch Drücken der Taste TA auf dem ersten Mobilteil MT1 an. Schon tönt es aus dem Lautsprecher EAW des Wandgerätes WG, während Monika's Gesicht im Display DPL des Wandgerätes erscheint: *"Hallo Holger, Monika hier."* Holger spricht ins Mikrofon AEW vom ersten Mobilteil MT1: *"Hallo, Monika."* Monika weiter: *"Holger, ich habe mich verspätet und werde nicht rechtzeitig zum Essen zu Hause sein."* Holger antwortet: *"Ist okay."* Danach wird das Gespräch beendet.

FIGUR 6 zeigt im Anschluss an das erste Szenario in der FIGUR 5 - z.B. eine Stunde später - ein zweites Szenario zum freihändigen Führen einer Telefonkonferenz im Sinne von Freisprechen, also ohne Zuhilfenahme der Hände.

Monika, die noch immer mit dem Auto unterwegs, ruft erneut an. Nachdem Holger wieder die Taste TA an dem Mobilteil MT1 gedrückt hat, tönt es aus dem Lautsprecher: "Hallo Holger, ich bin es noch einmal." Holger: "Das Essen ist fertig. Wo bist du jetzt?" Da kommt Franziska in die Küche, bekommt mit, dass Holger und Monika miteinander telefonieren und nimmt sich das weitere erste Mobilteil MT1' vom Wandgerät WG, drückt die Taste TA und sagt: "Hallo Monika, hier ist Franziska. Wo bleibst du denn. Ich habe Hunger. Immer müssen wir auf dich warten." Monika ganz lapidar: "Ich bin in 5 Minuten da. Wo ist Lennart?" Holger's Antwort: "Lennart ist im Bad und duscht sich." Danach wird die Telefonkonferenz beendet.

## Patentansprüche

1. Festteil (FT, BS, GW) für ein Telefon (TF, TF') zum schnurlosen Telefonieren, wobei das Festteil (FT, BS, GW) durch drahtlose Kommunikation mit wenigstens einem ersten Mobilteil (MT1, MT1') und mit wenigstens einem zweiten Mobilteil (MT2, WG, HG) verbindbar ist, **dadurch gekennzeichnet, dass** das Festteil (FT, BS, GW) aufweist: Mittel zur Aufteilung der zu einem über das wenigstens eine zweite Mobilteil (MT2, WG, HG) geführte Telefongespräch gehörenden Mikrofon- und Lautsprecherdaten zwischen dem wenigstens einen ersten Mobilteil (MT1, MT1') und dem wenigstens einen zweiten Mobilteil (MT2, WG, HG), wobei die Mittel zur Aufteilung derart ausgestaltet sind, die Mikrofondaten von dem wenigstens einen ersten Mobilteil (MT1, MT1') zu empfangen und die Lautsprecherdaten
• an das wenigstens eine zweite Mobilteil (MT2, WG, HG) zu senden, oder
• an das wenigstens eine erste Mobilteil (MT1, MT1') und an das wenigstens eine zweite Mobilteil (MT2, WG, HG) zu senden, wobei eine Kennzeichnung übertragen wird, die besagt, dass die Lautsprecherdaten nur für das wenigstens eine zweite Mobilteil (MT2, WG, HG) bestimmt sind.

2. Festteil (FT, BS, GW) nach Anspruch 1, **dadurch gekennzeichnet, dass**
• das Festteil (FT, BS, GW) einen Informationsspeicher (ISP) zur Verwaltung wenigstens einer Zuordnung zwischen dem wenigstens einem ersten Mobilteil (MT1, MT1') und dem wenigstens einem zweiten Mobilteil (MT2, WG, HG) aufweist, und
• die Mittel zur Aufteilung der zu einem Telefongespräch gehörenden Mikrofon- und Lautsprecherdaten zwischen dem wenigstens einen ersten Mobilteil (MT1, MT1') und dem wenigstens einen zweiten Mobilteil (MT2, WG, HG) derart ausgestaltet sind, die Aufteilung in Abhängigkeit des Bestehens einer Zuordnung zwischen dem wenigstens einen ersten Mobilteil (MT1, MT1') und dem wenigstens einen zweiten Mobilteil (MT2, WG, HG) im Informationsspeicher (ISP) vorzunehmen.

3. Festteil (FT, BS, GW) nach Anspruch 1 oder 2, **dadurch gekennzeichnet, dass** die Mittel zur Aufteilung der zu einem Telefongespräch gehörenden Mikrofon- und Lautsprecherdaten derart ausgestaltet sind, die Aufteilung erst dann vorzunehmen, wenn das Festteil (FT, BS, GW) von dem wenigstens einen ersten Mobilteil (MT1, MT1') eine entsprechende Anforderung erhalten hat.

4. Festteil (FT, BS, GW) nach Anspruch 1 bis 3, **dadurch gekennzeichnet, dass** die Mittel zur Aufteilung der zu einem Telefongespräch gehörenden Mikrofon- und Lautsprecherdaten derart ausgestaltet sind, dass die Lautsprecherdaten in einem gemeinsamen Empfangskommunikationskanal (EKK) an das wenigstens eine erste Mobilteil (MT1, MT1') und an das wenigstens eine zweite Mobilteil (MT2, WG, HG) gesendet werden.

5. Festteil (FT, BS, GW) nach Anspruch 1 bis 3, **dadurch gekennzeichnet, dass** die Mittel zur Aufteilung der zu einem Telefongespräch gehörenden Mikrofon- und Lautsprecherdaten derart ausgestaltet sind, dass die Lautsprecherdaten in einem gemeinsamen Empfangskommunikationskanal (EKK) an alle ersten Mobilteile (MT1, MT1') und in einem anderen Empfangskommunikationskanal (EKK) das wenigstens eine zweite Mobilteil (MT2, WG, HG) gesendet werden.

6. Festteil (FT, BS, GW) nach Anspruch 1 bis 3, **dadurch gekennzeichnet, dass** die Mittel zur Aufteilung der zu einem Telefongespräch gehörenden Mikrofon- und Lautsprecherdaten derart ausgestaltet sind, dass die Lautsprecherdaten in jeweils einem Empfangskommunikationskanal (EKK) an alle ersten Mobilteile (MT1, MT1') und das wenigstens eine zweite Mobilteil (MT2, WG, HG) gesendet werden.

7. Festteil (FT, BS, GW) nach Anspruch 1 bis 6, **dadurch gekennzeichnet, dass** die Mittel zur Aufteilung der zu einem Telefongespräch gehörenden Mikrofon- und Lautsprecherdaten derart ausgestaltet sind, die Übertragung der Kennzeichnung mittels Kennzeichnung von Steuerdaten, insbesondere durch ein Informationselement, in dem zur Übertragung der Lautsprecherdaten verwendeten Empfangskommunikationskanal (EKK) vorzunehmen.

8. Festteil (FT, BS, GW) nach Anspruch 1 bis 4 oder 7, **dadurch gekennzeichnet, dass** das Festteil (FT, BS, GW) dazu eingerichtet ist, mit dem wenigstens einen ersten Mobilteil (MT1, MT1') und dem wenigstens einen zweiten Mobilteil (MT2, WG, HG) derart zu kommunizieren, dass die drahtlose Kommunikation unter Verwendung von Zeitschlitzen erfolgt, wobei sich die Kommunikation aus Sicht der Mobilteile in eine Sendephase (TX) und eine Empfangsphase (RX) mit jeweils mehreren Zeitschlitzen aufteilt, wobei die drahtlose Kommunikation zwischen dem Festteil (FT) und den Mobilteilen (MT1, MT1', MT2) auf jeweils zwei Kommunikationskanälen (KK) mit jeweils einer Frequenz- und Zeitkomponente stattfindet, wobei das wenigstens eine erste Mobilteil (MT1, MT1') und das wenigstens eine zweite Mobilteil (MT2, WG, HG) in der Empfangsphase (RX) einen gemeinsamen Zeitschlitz und in der Sendephase (TX) separate Zeitschlitze benutzen.

9. Festteil (FT, BS, GW) nach Anspruch 2 bis 8, **dadurch gekennzeichnet, dass** der Informationsspeicher (ISP) einen "Distributed Virtual Shared Information Spaces (DVSIS)"-Speicherbereich (SB) enthält, in dem die Zuordnung zwischen wenigstens einem ersten Mobilteil (MT1, MT1') und wenigstens einem zweiten Mobilteil (MT2, WG, HG) hinterlegt ist.

10. Festteil (FT, BS, GW) nach Anspruch 1 bis 9, **dadurch gekennzeichnet, dass** das Festteil (FT, BS, GW) dazu eingerichtet ist, einen Sendekommunikationskanal (SKK) zu nutzen, der zwar Steuerdaten, jedoch keine Nutzdaten beinhaltet.

11. Mobilteil (MT1, MT1') zum schnurlosen Telefonieren, wobei das Mobilteil (MT1, MT1') durch drahtlose Kommunikation mit einem Festteil (FT, BS, GW) verbindbar ist, **dadurch gekennzeichnet, dass** das Mobilteil (MT1, MT1') eingerichtet ist, an das Mobilteil (MT1, MT1') und an wenigstens ein zweites Mobilteil (MT2, WG, HG) in einem gemeinsamen Kommunikationskanal gesendete Lautsprecherdaten zu empfangen und auszuwerten, ob eine Kennzeichnung vorliegt, die besagt, dass die Lautsprecherdaten nur für wenigstens ein zweites Mobilteil (MT2, WG, HG) bestimmt sind.

12. Mobilteil (MT1, MT1') zum schnurlosen Telefonieren nach Anspruch 11, **dadurch gekennzeichnet, dass** das Mobilteil (MT1, MT1') eingerichtet ist, die an das Mobilteil (MT1, MT1') und an das wenigstens eine zweite Mobilteil (MT2, WG, HG) gesendeten Lautsprecherdaten nicht auszugeben, wenn die Auswertung ergeben hat, dass eine Kennzeichnung vorliegt, die besagt, dass die Lautsprecherdaten nur für wenigstens ein zweites Mobilteil (MT2, WG, HG) bestimmt sind.

13. Mobilteil (MT1, MT1') zum schnurlosen Telefonieren nach Anspruch 11 bis 12, **dadurch gekennzeichnet, dass** das Mobilteil (MT1, MT1') eingerichtet ist, die Erkennung der Kennzeichnung anhand der Auswertung von Steuerdaten, insbesondere durch Auswertung eines Informationselements, vorzunehmen.

14. Verfahren zum schnurlosen Telefonieren, bei dem wenigstens ein erstes Mobilteil (MT1, MT1') und wenigstens ein zweites Mobilteil (MT2, WG, HG) mit einem Festteil (FT, BS, GW) durch drahtlose Kommunikation verbunden werden, **dadurch gekennzeichnet, dass** die zu einem über das wenigstens eine zweite Mobilteil (MT2, WG, HG) geführte Telefongespräch gehörenden Mikrofon- und Lautsprecherdaten zwischen dem wenigstens einen ersten Mobilteil (MT1, MT1') und dem wenigstens einen zweiten Mobilteil (MT2, WG, HG) aufgeteilt werden, wobei das Festteil (FT, BS, GW) Mikrofondaten von dem wenigstens einen ersten Mobilteil (MT1, MT1') empfängt und die Lautsprecherdaten
• an das wenigstens eine zweite Mobilteil (MT2, WG, HG) sendet, oder
• an das wenigstens eine erste Mobilteil (MT1, MT1') und an das wenigstens eine zweite Mobilteil, (MT2, WG, HG) sendet, wobei eine Kennzeichnung übertragen wird, die besagt, dass die Lautsprecherdaten nur für das wenigstens eine zweite Mobilteil (MT2, WG, HG) bestimmt sind.

15. Verfahren zum schnurlosen Telefonieren nach Anspruch 14, **dadurch gekennzeichnet, dass** die Aufteilung der zu einem Telefongespräch gehörenden Mikrofon- und Lautsprecherdaten in Abhängigkeit des Bestehens einer Zuordnung zwischen dem wenigstens einen ersten Mobilteil (MT1, MT1') und dem wenigstens einen zweiten Mobilteil (MT2, WG, HG) geschieht.

16. Verfahren zum schnurlosen Telefonieren nach Anspruch 15, **dadurch gekennzeichnet, dass** die Zuordnung in einem in dem Festteil (FT, BS, GW) befindlichen Informationsspeicher (ISP) gespeichert wird.

17. Verfahren zum schnurlosen Telefonieren nach Anspruch 14 bis 16, **dadurch gekennzeichnet, dass** die Aufteilung der zu einem Telefongespräch gehörenden Mikrofon- und Lautsprecherdaten erst dann erfolgt, wenn das Festteil (FT, BS, GW) von dem wenigstens einen ersten Mobilteil (MT1, MT1') eine entsprechende Anforderung erhalten hat.

18. Verfahren zum schnurlosen Telefonieren nach Anspruch 14 bis 17, **dadurch gekennzeichnet, dass** bei der Aufteilung der zu einem Telefongespräch gehörenden Mikrofon- und Lautsprecherdaten die Lautsprecherdaten in einem gemeinsamen Empfangskommunikationskanal (EKK) an das wenigstens eine erste Mobilteil (MT1, MT1') und an das wenigstens eine zweite Mobilteil (MT2, WG, HG) gesendet werden.

19. Verfahren zum schnurlosen Telefonieren nach Anspruch 14 bis 18, **dadurch gekennzeichnet, dass** bei der Aufteilung der zu einem Telefongespräch gehörenden Mikrofon- und Lautsprecherdaten die Lautsprecherdaten in einem gemeinsamen Empfangskommunikationskanal (EKK) an alle ersten Mobilteile (MT1, MT1') und in einem anderen Empfangskommunikationskanal (EKK) das wenigstens eine zweite Mobilteil (MT2, WG, HG) gesendet werden.

20. Verfahren zum schnurlosen Telefonieren nach Anspruch 14 bis 18, **dadurch gekennzeichnet, dass** bei der Aufteilung der zu einem Telefongespräch gehörenden Mikrofon- und Lautsprecherdaten die Lautsprecherdaten in jeweils einem Empfangskommunikationskanal (EKK) an alle ersten Mobilteile (MT1, MT1') und das wenigstens eine zweite Mobilteil (MT2, WG, HG) gesendet werden.

21. Verfahren zum schnurlosen Telefonieren nach Anspruch 14 bis 18, **dadurch gekennzeichnet, dass** die Kennzeichnung mittels Kennzeichnung von Steuerdaten, insbesondere durch ein Informationselement, in dem zur Übertragung der Lautsprecherdaten verwendeten Empfangskommunikationskanal (EKK) vorgenommen wird.

22. Verfahren zum schnurlosen Telefonieren nach Anspruch 14 bis 21, **dadurch gekennzeichnet, dass** die drahtlose Kommunikation unter Verwendung von Zeitschlitzen erfolgt, wobei sich die Kommunikation aus Sicht der Mobilteile in eine Sendephase (TX) und eine Empfangsphase (RX) mit jeweils mehreren Zeitschlitzen aufteilt, wobei die drahtlose Kommunikation zwischen dem Festteil (FT) und den Mobilteilen (MT1, NT1', MT2) auf jeweils zwei Kommunikationskanälen (KK) mit jeweils einer Frequenz- und Zeitkomponente stattfindet, wobei das wenigstens eine erste Mobilteil (MT1, MT1') und das wenigstens eine zweite Mobilteil (MT2, WG, HG) in der Empfangsphase (RX) einen gemeinsamen Zeitschlitz und in der Sendephase (TX) separate Zeitschlitze benutzen.

23. Verfahren zum schnurlosen Telefonieren nach Anspruch 14 bis 22, **dadurch gekennzeichnet, dass** der Informationsspeicher (ISP) einen "Distributed Virtual Shared Information Spaces (DVSIS)"-Speicherbereich (SB) enthält, in dem die Zuordnung zwischen wenigstens einem ersten Mobilteil (MT1, MT1') und wenigstens einem zweiten Mobilteil (MT2, WG, HG) hinterlegt ist.

24. Verfahren zum schnurlosen Telefonieren nach Anspruch 14 bis 23, **dadurch gekennzeichnet, dass** ein Sendekommunikationskanal (SKK) genutzt wird, der zwar Steuerdaten, jedoch keine Nutzdaten beinhaltet.

25. System zum schnurlosen Telefonieren, umfassend ein Festteil (FT, BS, GW), wenigstens ein erstes Mobilteil (MT1, MT1') und wenigstens ein zweites Mobilteil (MT2, WG, HG), bei dem das wenigstens eine erste Mobilteil (MT1, MT1') und das wenigstens eine zweite Mobilteil (MT2, WG, HG) mit einem Festteil (FT, BS, GW) durch drahtlose Kommunikation verbunden werden, **dadurch gekennzeichnet, dass** die zu einem über das wenigstens eine zweite Mobilteil (MT2, WG, HG) geführte Telefongespräch gehörenden Mikrofon- und Lautsprecherdaten zwischen dem wenigstens einen ersten Mobilteil (MT1, MT1') und dem wenigstens einen zweiten Mobilteil (MT2, WG, HG) aufgeteilt werden, wobei das Festteil (FT, BS, GW) Mikrofondaten von dem wenigstens einen ersten Mobilteil (MT1, MT1') empfängt und die Lautsprecherdaten
• an das wenigstens eine zweite Mobilteil (MT2, WG, HG) sendet, oder
• an das wenigstens eine erste Mobilteil (MT1, MT1') und an das wenigstens eine zweite Mobilteil (MT2, WG, HG) sendet, wobei eine Kennzeichnung übertragen wird, die besagt, dass die Lautsprecherdaten nur für das wenigstens eine zweite Mobilteil (MT2, WG, HG) bestimmt sind.

26. System zum schnurlosen Telefonieren nach Anspruch 25, **dadurch gekennzeichnet, dass** die Aufteilung der zu einem Telefongespräch gehörenden Mikrofon- und Lautsprecherdaten in Abhängigkeit des Bestehens einer Zuordnung zwischen dem wenigstens einen ersten Mobilteil (MT1, MT1') und dem wenigstens einen zweiten Mobilteil (MT2, WG, HG) geschieht.

27. System zum schnurlosen Telefonieren nach Anspruch 26, **dadurch gekennzeichnet, dass** die Zuordnung in einem in dem Festteil (FT, BS, GW) befindlichen Informationsspeicher (ISP) gespeichert wird.

## Claims

1. A fixed part (FT, BS, GW) for a telephone (TF, TF') for making a telephone call wirelessly, wherein the fixed part (FT, BS, GW) can be connected by wireless communication to at least one first mobile part (MT1, MT1') and to at least one second mobile part (MT2, WG, HG), **characterised in that** the fixed part (FT, BS, GW) has: means for dividing the microphone and loudspeaker data belonging to a telephone conversation guided via the at least one second mobile part (MT2, WG, HG) between the at least one first mobile part (MT1, MT1') and the at least one second mobile part (MT2, WG, HG), wherein the dividing means are designed such that the microphone data are received from the at least one first mobile part (MT1, MT1') and
• the loudspeaker data are transmitted to the at least one second mobile part (MT2, WG, HG), or
• the loudspeaker data are transmitted to the at least one first mobile part (MT1, MT1') and to the at least one second mobile part (MT2, WG, HG), wherein a labelling is transmitted, which indicates that the loudspeaker data are intended only for the at least one second mobile part (MT2, WG, HG).

2. The fixed part (FT, BS, GW) according to claim 1, **characterised in that**
• the fixed part (FT, BS, GW) comprises an information memory (ISP) for managing at least one allocation between the at least one first mobile part (MT1, MT1') and the at least one second mobile part (MT2, WG, HG), and
• the means for dividing the microphone and loudspeaker data belonging to a telephone conversation between the at least one first mobile part (MT1, MT1') and the at least one second mobile part (MT2, WG, HG) are designed such that the division is performed depending on the existence of an allocation between the at least one first mobile part (MT1, MT1') and the at least one second mobile part (MT2, WG, HG) in the information memory (ISP).

3. The fixed part (FT, BS, GW) according to claim 1 or 2, **characterised in that** the means for dividing the microphone and loudspeaker data belonging to a telephone conversation are designed such that the division is performed only when the fixed part (FT, BS, GW) has received a corresponding request from the at least one first mobile part (MT1, MT1').

4. The fixed part (FT, BS, GW) according to claim 1 to 3, **characterised in that** the means for dividing the microphone and loudspeaker data belonging to a telephone conversation are designed such that the loudspeaker data are transmitted in a common receiving communications channel (EKK) to the at least one first mobile part (MT1, MT1') and to the at least one second mobile part (MT2, WG, HG).

5. The fixed part (FT, BS, GW) according to claim 1 to 3, **characterised in that** the means for dividing the microphone and loudspeaker data belonging to a telephone conversation are designed such that the loudspeaker data are transmitted in a common receiving communications channel (EKK) to all first mobile parts (MT1, MT1') and in another receiving communications channel (EKK) to the at least one second mobile part (MT2, WG, HG).

6. The fixed part (FT, BS, GW) according to claim 1 to 3, **characterised in that** the means for dividing the microphone and loudspeaker data belonging to a telephone conversation are designed such that the loudspeaker data are transmitted in a receiving communications channel (EKK) to all first mobile parts (MT1, MT1') and to the at least one second mobile part (MT2, WG, HG).

7. The fixed part (FT, BS, GW) according to claim 1 to 6, **characterised in that** the means for dividing the microphone and loudspeaker data belonging to a telephone conversation are designed to transmit the labelling by means of labelling of control data, in particular by an information element, in the receiving communications channel (EKK) used to transmit the loudspeaker data.

8. The fixed part (FT, BS, GW) according to claim 1 to 4 or 7, **characterised in that** the fixed part (FT, BS, GW) is designed to communicate with the at least one first mobile part (MT1, MT1') and the at least one second mobile part (MT2, WG, HG) in such a way that the wireless communication is performed with use of time slots, wherein the communication is divided from the viewpoint of the mobile parts into a transmitting phase (TX) and a receiving phase (RX), each having a plurality of time slots, wherein the wireless communication between the fixed part (FT) and the mobile parts (MT1, MT1', MT2) takes place over two communications channels (KK) each having a frequency and time component, wherein the at least one first mobile part (MT1, MT1') and the at least one second mobile part (MT2, WG, HG) use a common time slot in the receiving phase (RX) and separate time slots in the transmitting phase (TX).

9. The fixed part (FT, BS, GW) according to claim 2 to 8, **characterised in that** the information memory (ISP) contains a "Distributed Virtual Shared Information Spaces (DVSIS)" memory region (SB), in which the allocation between at least one first mobile part (MT1, MT1') and at least one second mobile part (MT2, WG, HG) is stored.

10. The fixed part (FT, BS, GW) according to claim 1 to 9, **characterised in that** the fixed part (FT, BS, GW) is designed to use a transmitting communications channel (SKK) which contains control data, but no application data.

11. A mobile part (MT1, MT1') for making a telephone call wirelessly, wherein the mobile part (MT1, MT1') can be connected to a fixed part (FT, BS, GW) by wireless communication, **characterised in that** the mobile part (MT1, MT1') is designed to receive loudspeaker data transmitted to the mobile part (MT1, MT1') and to at least one second mobile part (MT2, WG, HG) in a common communications channel and to asses said data in order to determine whether or not a labelling is present which indicates that the loudspeaker data are intended only for at least one second mobile part (MT2, WG, HG).

12. The mobile part (MT1, MT1') for making a telephone call wirelessly according to claim 11, **characterised in that** the mobile part (MT1, MT1') is designed not to output the loudspeaker data transmitted to the mobile part (MT1, MT1') and to the at least one second mobile part (MT2, WG, HG) when the assessment has revealed that there is a labelling present which indicates that the loudspeaker data are intended only for at least one second mobile part (MT2, WG, HG).

13. The mobile part (MT1, MT1') for making a telephone call wirelessly according to claim 11 to 12, **characterised in that** the mobile part (MT1, MT1') is designed to recognise the labelling on the basis of the assessment of control data, in particular by assessment of an information element.

14. A method for making a telephone call wirelessly, in which at least one first mobile part (MT1, MT1') and at least one second mobile part (MT2, WG, HG) are connected to a fixed part (FT, BS, GW) by wireless communication, **characterised in that** the microphone and loudspeaker data belonging to a telephone conversation guided via the at least one second mobile part (MT2, WG, HG) are divided between the at least one first mobile part (MT1, MT1') and the at least one second mobile part (MT2, WG, HG), wherein the fixed part (FT, BS, GW) receives microphone data from the at least one first mobile part (MT1, MT1') and
• transmits the loudspeaker data to the at least one second mobile part (MT2, WG, HG), or
• transmits the loudspeaker data to the at least one first mobile part (MT1, MT1') and to the at least one second mobile part (MT2, WG, HG), wherein a labelling is transmitted, which indicates that the loudspeaker data are intended only for the at least one second mobile part (MT2, WG, HG).

15. The method for making a telephone call wirelessly according to claim 14, **characterised in that** the microphone and loudspeaker data belonging to a telephone conversation are divided depending on the existence of an allocation between the at least one first mobile part (MT1, MT1') and the at least one second mobile part (MT2, WG, HG).

16. The method for making a telephone call wirelessly according to claim 15, **characterised in that** the allocation is stored in an information memory (ISP) located in the fixed part (FT, BS, GW).

17. The method for making a telephone call wirelessly according to claim 14 to 16, **characterised in that** the microphone and loudspeaker data belonging to a telephone conversation are divided only when the fixed part (FT, BS, GW) has received a corresponding request from the at least one first mobile part (MT1, MT1').

18. The method for making a telephone call wirelessly according to claim 14 to 17, **characterised in that**, as the microphone and loudspeaker data belonging to a telephone conversation are divided, the loudspeaker data are transmitted in a common receiving communications channel (EKK) to the at least one first mobile part (MT1, MT1') and to the at least one second mobile part (MT2, WG, HG).

19. The method for making a telephone call wirelessly according to claim 14 to 18, **characterised in that**, as the microphone and loudspeaker data belonging to a telephone conversation are divided, the loudspeaker data are transmitted in a common receiving communications channel (EKK) to all first mobile parts (MT1, MT1') and in another receiving communications channel (EKK) to the at least one second mobile part (MT2, WG, HG).

20. The method for making a telephone call wirelessly according to claim 14 to 18, **characterised in that**, as the microphone and loudspeaker data belonging to a telephone conversation are divided, the loudspeaker data are transmitted in a receiving communications channel (EKK) to all first mobile parts (MT1, MT1') and to the at least one second mobile part (MT2, WG, HG).

21. The method for making a telephone call wirelessly according to claim 14 to 18, **characterised in that** the labelling is performed by means of labelling of control data, in particular by an information element, in the receiving communications channel (EKK) used to transmit the loudspeaker data.

22. The method for making a telephone call wirelessly according to claim 14 to 21, **characterised in that** the wireless communication is performed with use of time slots, wherein the communication is divided from the viewpoint of the mobile parts into a transmitting phase (TX) and a receiving phase (RX), each having a plurality of time slots, wherein the wireless communication between the fixed part (FT) and the mobile parts (MT1, MT1', MT2) takes place over two communications channels (KK) each having a frequency and time component, wherein the at least one first mobile part (MT1, MT1') and the at least one second mobile part (MT2, WG, HG) use a common time slot in the receiving phase (RX) and separate time slots in the transmitting phase (TX).

23. The method for making a telephone call wirelessly according to claim 14 to 22, **characterised in that** the information memory (ISP) contains a "Distributed Virtual Shared Information Spaces (DVSIS)" memory region (SB), in which the allocation between at least one first mobile part (MT1, MT1') and at least one second mobile part (MT2, WG, HG) is stored.

24. The method for making a telephone call wirelessly according to claim 14 to 23, **characterised in that** a transmitting communications channel (SKK) is used which contains control data, but no application data.

25. A system for making a telephone call wirelessly, comprising a fixed part (FT, BS, GW), at least one first mobile part (MT1, MT1'), and at least one second mobile part (MT2, WG, HG), in which the at least one first mobile part (MT1, MT1') and the at least one second mobile part (MT2, WG, HG) are connected by wireless communication to a fixed part (FT, BS, GW), **characterised in that** the microphone and loudspeaker data belonging to a telephone conversation guided via the at least one second mobile part (MT2, WG, HG) are divided between the at least one first mobile part (MT1, MT1') and the at least one second mobile part (MT2, WG, HG), wherein the fixed part (FT, BS, GW) receives microphone data from the at least one first mobile part (MT1, MT1') and
• transmits the loudspeaker data to the at least one second mobile part (MT2, WG, HG), or
• transmits the loudspeaker data to the at least one first mobile part (MT1, MT1') and to the at least one second mobile part (MT2, WG, HG), wherein a labelling is transmitted, which indicates that the loudspeaker data are intended only for the at least one second mobile part (MT2, WG, HG).

26. The system for making a telephone call wirelessly according to claim 25, **characterised in that** the microphone and loudspeaker data belonging to a telephone conversation are divided depending on the existence of an allocation between the at least one first mobile part (MT1, MT1') and the at least one second mobile part (MT2, WG, HG).

27. The system for making a telephone call wirelessly according to claim 26, **characterised in that** the allocation is stored in an information memory (ISP) located in the fixed part (FT, BS, GW).

## Revendications

1. Unité fixe (FT, BS, GW) destinée à un téléphone (TF, TF') pour la téléphonie sans fil, où l'unité fixe (FT, BS, GW) peut être reliée par une communication sans fil avec au moins une première unité mobile (MT1, MT1') et avec au moins une deuxième unité mobile (MT2, WG, HG), **caractérisée en ce que** l'unité fixe (FT, BS, GW) présente :
des moyens destinés à la répartition des données de microphone et de haut-parleur correspondant à la conversation téléphonique menée sur l'au moins une deuxième unité mobile (MT2, WG, HG) entre l'au moins une première unité mobile (MT1, MT1') et l'au moins une deuxième unité mobile (MT2, WG, HG),
où les moyens destinés à la répartition sont conçus de telle manière que les données de microphone sont à réceptionner par l'au moins une première unité mobile (MT1, MT1') et les données de haut parleur
• sont à envoyer à l'au moins une deuxième unité mobile (MT2, WG, HG), ou
• sont à envoyer à l'au moins une première unité mobile (MT1, MT1') et à l'au moins une deuxième unité mobile (MT2, WG, HG), où un identifiant est transmis, qui confirme que les données de haut-parleur ne sont destinées que pour l'au moins une deuxième unité mobile (MT2, WG, HG).

2. Unité fixe (FT, BS, GW) selon la revendication 1, **caractérisée en ce que**
• l'unité fixe (FT, BS, GW) présente une mémoire d'informations (ISP) destinée à la gestion d'au moins un classement entre l'au moins une première unité mobile (MT1, MT1') et l'au moins une deuxième unité mobile (2, WG, HG), et
• les moyens destinés à la répartition des données de microphone et de haut-parleur correspondant à une conversation téléphonique entre l'au moins une première unité mobile (MT1, MT1') et l'au moins une deuxième unité mobile (MT2, WG, HG) sont conçus de telle façon que la répartition est effectuée en fonction de la présence d'un classement entre l'au moins une première unité mobile (MT1, MT1') et l'au moins une deuxième unité mobile (MT2, WG, HG) dans la mémoire d'information (ISP).

3. Unité fixe (FT, BS, GW) selon la revendication 1, ou 2, **caractérisée en ce que** les moyens destinés à la répartition des données de microphone et de haut-parleur correspondant à une conversation téléphonique sont conçus de telle façon que la répartition n'est effectuée que lorsque l'unité fixe (FT, BS, GW) a reçu une requête correspondante de l'au moins une première unité mobile (MT1, MT1').

4. Unité fixe (FT, BS, GW) selon les revendications 1 à 3, **caractérisée en ce que** les moyens destinés à la répartition des données de microphone et de haut-parleur correspondant à une conversation téléphonique sont conçus de telle façon que les données de haut-parleur sont envoyées par un canal de communication de réception commun (EKK) vers l'au moins une première unité mobile (MT1, MT1') et vers l'au moins une deuxième unité mobile (MT2, WG, HG).

5. Unité fixe (FT, BS, GW) selon les revendications 1 à 3, **caractérisée en ce que** les moyens destinés à la répartition des données de microphone et de haut-parleur correspondant à une conversation téléphonique sont conçus de telle façon que les données de haut-parleur sont envoyées par un canal de communication de réception commun (EKK) vers toutes les premières unités mobiles (MT1, MT1') et dans un autre canal de communication de réception (EKK) vers l'au moins une deuxième unité mobile (MT2, WG, HG).

6. Unité fixe (FT, BS, GW) selon les revendications 1 à 3, **caractérisée en ce que** les moyens destinés à la répartition des données de microphone et de haut-parleur correspondant à une conversation téléphonique sont conçus de telle façon que les données de haut-parleur sont envoyées respectivement dans un canal de communication de réception (EKK) vers toutes les premières unités mobiles (MT1, MT1') et vers l'au moins une deuxième unité mobile (MT2, WG, HG).

7. Unité fixe (FT, BS, GW) selon les revendications 1 à 6, **caractérisée en ce que** les moyens destinés à la répartition des données de microphone et de haut-parleur correspondant à une conversation téléphonique sont conçus de façon à pouvoir effectuer la transmission de l'identifiant au moyen d'un identifiant de données de commande, en particulier, par un élément d'information, dans le canal de communication de réception (EKK) utilisé pour la transmission des données de haut-parleur.

8. Unité fixe (FT, BS, GW) selon les revendications 1 à 4, ou 7, **caractérisée en ce que** l'unité fixe (FT, BS, GW) est installée pour communiquer avec l'au moins une première unité mobile (MT1, MT1') et l'au moins une deuxième unité mobile (MT2, WG, HG) de telle façon que la communication sans fil s'effectue moyennant l'utilisation de fenêtres temporelles, où la communication se répartit du point de vue des unités mobiles en une phase d'émission (TX) et une phase de réception (RX) avec, chaque fois, des fenêtres temporelles, où la communication sans fil entre l'unité fixe (FT) et les unités mobiles (MT1, MT1', MT2) a lieu sur respectivement deux canaux de communication (KK) avec respectivement une composante de fréquence et une composante de temps, où l'au moins une première unité mobile (MT1, MT1') et l'au moins une deuxième unité mobile (MT2, WG, HG) utilisent une fenêtre temporelle commune dans la phase de réception (RX) et des fenêtres temporelles (TX) séparées dans la phase d'émission (TX).

9. Unité fixe (FT, BS, GW) selon les revendications 2 à 8, **caractérisée en ce que** la mémoire d'informations (ISP) contient un domaine de mémoire (SB) « Distributed Virtual Shared Information Spaces (DVSIS) » (espaces d'information partagée virtuelle répartie), dans lequel le classement entre l'au moins une première unité mobile (MT1, MT1') et l'au moins une deuxième unité mobile (MT2, WG, HG) est déposé.

10. Unité fixe (FT, BS, GW) selon les revendications 1 à 9, **caractérisée en ce que** l'unité fixe (FT, BS, GW) est installée pour utiliser un canal de communication d'émission (SKK) qui contient bien des données de commande, mais pas de données d'utilisation.

11. Unité mobile (MT1, MT1') pour téléphoner sans fil, où l'unité mobile (MT1, T1') peut être reliée avec une unité fixe (FT, BS, GW) par une communication sans fil, **caractérisée en ce que** l'unité mobile (MT1, MT1') est installée pour recevoir et exploiter des données de haut-parleur envoyées dans un canal de communication commun vers l'unité mobile (MT1, MT1') et vers l'au moins une deuxième unité mobile (MT2, WG, HG), si une identification est présente qui confirme que les données de haut-parleur ne sont destinées que pour au moins une deuxième unité mobile (MT2, WG, HG).

12. Unité mobile (MT1, MT1') pour téléphoner sans fil selon la revendication 11, **caractérisée en ce que** l'unité mobile (MT1, MT1') est installée pour ne pouvoir délivrer des données de haut-parleur envoyées vers l'unité mobile (MT1, MT1') et vers l'au moins une deuxième unité mobile (MT2, WG, HG) uniquement si l'exploitation a montré qu'une identification est présente qui confirme que les données de haut-parleur ne sont destinées que pour au moins une deuxième unité mobile (MT2, WG, HG).

13. Unité mobile (MT1, MT1') pour téléphoner sans fil selon les revendications 11 à 12, **caractérisée en ce que** l'unité mobile (MT1, MT1') est installée pour procéder à la reconnaissance de l'identification à l'aide de l'exploitation de données de commande, en particulier, par l'exploitation d'un élément d'information.

14. Procédé de téléphonie sans fil, chez lequel au moins une première unité mobile (MT1, MT1') et au moins une deuxième unité mobile (MT2, WG, HG) sont reliées avec une unité fixe (FT, BS, GW) par une communication sans fil, **caractérisé en ce que** les données de microphone et de haut-parleur correspondant à une conversation téléphonique menée par l'intermédiaire de l'au moins une deuxième unité mobile (MT2, WG, HG), sont réparties entre l'au moins une première unité mobile (MT1, MT1') et l'au moins une deuxième unité mobile (MT2, WG, HG), où l'unité fixe (FT, BS, GW) reçoit des données de microphone de l'au moins une première unité mobile (MT1, MT1') et
• envoie des données de haut-parleur vers l'au moins une deuxième unité mobile (MT2, WG, HG), ou
• envoie des données de haut-parleur vers l'au moins une première unité mobile (MT1, MT1') et vers l'au moins une deuxième unité mobile (MT2, WG, HG), où une identification est transmise qui confirme que les données de haut-parleur ne sont destinées que pour l'au moins une deuxième unité mobile (MT2, WG, HG).

15. Procédé de téléphonie sans fil selon la revendication 14, **caractérisé en ce que** la répartition des données de microphone et de haut-parleur correspondant à une conversation téléphonique a lieu en fonction de la présence d'un classement entre l'au moins une première unité mobile (MT1, MT1') et l'au moins une deuxième unité mobile (MT2, WG, HG).

16. Procédé de téléphonie sans fil selon la revendication 15, **caractérisé en ce que** le classement est mémorisé dans une mémoire d'information (ISP) se trouvant dans l'unité fixe (FT, BS, GW).

17. Procédé de téléphonie sans fil selon les revendications 14 à 16, **caractérisé en ce que** la répartition des données de microphone et de haut-parleur correspondant à une conversation téléphonique n'a lieu que lorsque l'unité fixe (FT, BS, GW) a reçu la demande correspondante de l'au moins une première unité mobile (MT1, MT1').

18. Procédé de téléphonie sans fil selon les revendications 14 à 17, **caractérisé en ce que**, lors de la répartition des données de microphone et de haut-parleur correspondant à une conversation téléphonique, les données de haut-parleur sont envoyées dans un canal de communication de réception (EKK) commun vers l'au moins une première unité mobile (MT1, MT1') et vers l'au moins une deuxième unité mobile (MT2, WG, HG).

19. Procédé de téléphonie sans fil selon les revendications 14 à 18, **caractérisé en ce que**, lors de la répartition des données de microphone et de haut-parleur correspondant à une conversation téléphonique, les données de haut-parleur sont envoyées dans un canal de communication de réception (EKK) commun vers toutes les premières unités mobiles (MT1, MT1') et dans un autre canal de communication de réception (EKK) vers l'au moins une deuxième unité mobile (MT2, WG, HG).

20. Procédé de téléphonie sans fil selon les revendications 14 à 18, **caractérisé en ce que**, lors de la répartition des données de microphone et de haut-parleur correspondant à une conversation téléphonique, les données de haut-parleur sont envoyées dans respectivement un canal de communication de réception (EKK) vers toutes les premières unités mobiles (MT1, MT1') et l'au moins une deuxième unité mobile (MT2, WG, HG).

21. Procédé de téléphonie sans fil selon les revendications 14 à 18, **caractérisé en ce que** l'identification est effectuée au moyen de l'identification de données de commande, en particulier, par un élément d'information, dans le canal de communication de réception (EKK) employé pour la transmission des données de haut-parleur.

22. Procédé de téléphonie sans fil selon les revendications 14 à 21, **caractérisé en ce que** la communication sans fil s'effectue moyennant l'emploi de fenêtres temporelles, où la communication se répartit du point de vue des unités mobiles en une phase d'émission (TX) et une phase de réception (RX) avec chaque fois plusieurs fenêtres temporelles, où la communication sans fil entre l'unité fixe (FT) et les unités mobiles (MT1, MT1', MT2) a lieu sur respectivement deux canaux de communication (KK) avec respectivement une composante de fréquence et une composante temporelle, où l'au moins une première unité mobile (MT1, MT1') et l'au moins une deuxième unité mobile (MT2, WG, HG) utilisent une fenêtre temporelle commune dans la phase de réception (RX) et des fenêtres temporelles séparées dans la phase d'émission (TX).

23. Procédé de téléphonie sans fil selon les revendications 14 à 22, **caractérisé en ce que** la mémoire d'information (ISP) contient un domaine de mémoire (SB) « Distributed Virtual Shared Information Spaces (DVSIS) » (espaces d'information partagée virtuelle répartie) dans lequel le classement entre l'au moins une première unité mobile (MT1, MT1') et l'au moins une deuxième unité mobile (MT2, WG, HG) est déposé.

24. Procédé de téléphonie sans fil selon les revendications 14 à 23, **caractérisé en ce qu'**un canal de communication d'émission (SKK) est utilisé qui contient bien des donnés de commande, mais pas de données d'utilisation.

25. Système de téléphonie sans fil, comprenant une unité fixe (FT, BS, GW), au moins une première unité mobile (MT1, MT1') et au moins une deuxième unité mobile (MT2, WG, HG), chez lequel l'au moins une première unité mobile (MT1, MT1') et l'au moins une deuxième unité mobile (MT2, WG, HG) sont reliées avec une unité fixe (FT, WG, HG) par une communication sans fil, **caractérisé en ce que** les données de microphone et de haut-parleur correspondant à une conversation téléphonique menée par l'intermédiaire de l'au moins une deuxième unité mobile (MT2, WG, HG) sont réparties entre l'au moins une première unité mobile (MT1, MT1') et l'au moins une deuxième unité mobile (MT2, WG, HG), où l'unité fixe (FT, BS, GW) reçoit des données de microphone de l'au moins une première unité mobile (MT1, MT1') et
• envoie les données de haut parleur à l'au moins une deuxième unité mobile (MT2, WG, HG), ou
• envoie les données de haut parleur à l'au moins une première unité mobile (MT1, MT1') et à l'au moins une deuxième unité mobile (MT2, WG, HG), où un identifiant est transmis, qui confirme, que les données de haut-parleur ne sont destinées que pour l'au moins une deuxième unité mobile (MT2, WG, HG).

26. Système de téléphonie mobile selon la revendication 25, **caractérisé en ce que** la répartition des données de microphone et de haut-parleur correspondant à une conversation téléphonique s'effectue en fonction de la présence d'un classement entre l'au moins une première unité mobile (MT1, MT1') et l'au moins une deuxième unité mobile (MT2, WG, HG).

27. Système de téléphonie mobile selon la revendication 26, **caractérisé en ce que** le classement est mémorisé dans une mémoire d'information (ISP) se trouvant dans l'unité fixe (FT, BS, GW).
